# EUROPÄISCHE PATENTSCHRIFT

(11) **EP 3 332 040 B1**
(45) Veröffentlichungstag und Bekanntmachung des Hinweises auf die Patenterteilung: **03.03.2021**
(21) Anmeldenummer: 16750145.1
(22) Anmeldetag: 03.08.2016
(51) Int. Cl.: C21D 6/00, C22C 38/02, C22C 38/04, C22C 38/22, C22C 38/24

(54) **VERFAHREN ZUM HERSTELLEN EINES WERKZEUGSTAHLES**
METHOD FOR PRODUCING A TOOL STEEL
PROCÉDÉ DE FABRICATION D'UN ACIER À OUTILS

(30) Priorität: 07.08.2015 DE 102015113058
(43) Veröffentlichungstag der Anmeldung: 13.06.2018
(73) Patentinhaber: voestalpine BÖHLER Edelstahl GmbH & Co KG, 8605 Kapfenberg (AT)
(72) Erfinder: LEITNER, Harald, 8641 St. Marein (AT); GELDER, Siegfried, 8792 St. Peter Freienstein (AT)
(74) Vertreter: HGF
(86) Internationale Anmeldenummer: PCT/EP2016/068495
(87) Internationale Veröffentlichungsnummer: WO 2017/025397

(56) Entgegenhaltungen:
- EP-A1- 2 476 772
- EP-A1- 2 662 460
- JP-A- S5 014 526
- JP-A- H07 179 988

## Beschreibung

Die Erfindung betrifft ein Verfahren zum Herstellen eines Werkzeugstahles und insbesondere eines Warmarbeitsstahles.

Als Werkzeugstähle bezeichnet man Stahlmaterialien, welche insbesondere für das Formen oder Umformen einer Vielzahl von Materialien verwendet werden. Hierunter fallen unter anderem Kaltarbeitsstähle, Kunstoffformenstähle, pulvermetallurgische Stähle und Warmarbeitsstähle.

Als Warmarbeitsstähle bezeichnet man im Allgemeinen Werkzeugstähle, die bei ihrem Einsatz eine über 200°C liegende Dauertemperatur annehmen, wobei diese Dauertemperatur von aus dem Arbeitsspiel herrührenden Temperaturspitzen überlagert wird. Neben den allgemeinen mechanischen Belastungen, die solche Stähle durch die entsprechenden Formgebungsverfahren unterworfen sind, sind sie somit einer weiteren thermischen Belastung ausgesetzt. Allgemeine Anforderungen an Warmarbeitsstähle sind daher auch eine gute sogenannte Brandrissbeständigkeit, eine Verschleißform, die eine Folge häufiger Temperaturwechsel in Oberflächenbereich ist.

Zudem müssen Warmarbeitsstähle eine Beständigkeit gegen das Auftreten von Warmrissen besitzen, welche durch eine Kernforderung an Warmarbeitsstähle gesichert wird, nämlich die sogenannte Warmzähigkeit.

Zudem müssen solche Warmarbeitsstähle selbstverständlich hohe Festigkeiten besitzen, da sie üblicherweise auf Schlagdruck oder Zug in Wärme ausgesetzt sind. Nicht zuletzt ist natürlich ein gutes Verschleißverhalten bei Wärme wichtig, insbesondere eine geringe Klebneigung gegenüber den zu verarbeitenden Materialien, ein hoher Widerstand gegen Erosion, gegen Hochtemperaturkorrosion und Oxidation sowie eine gute Maßhaltigkeit auch im warmen Zustand.

Da diese Warmwerkzeuge mechanisch bearbeitet werden müssen, um anderen Materialien bei der Wärme die entsprechende Form geben zu können, ist eine gute Zerspanbarkeit ebenfalls eine Anforderung.

Besonders hohe Belastungen treten insbesondere bei der Hochtemperaturformung von Stahlmaterialien auf, insbesondere wenn diese Stahlmaterialien heiß in ein Werkzeug aus einem Warmarbeitsstahl eingelegt werden und in diesem Werkzeug anschließend abgekühlt werden, um eine Härtung herbeizuführen.

Die genannten Eigenschaften von Stahlmaterialien werden einerseits durch die chemische Analyse des Stahlmaterials bestimmt, hauptsächlich ist jedoch das Gefüge des Warmarbeitsstahls entscheidend, insbesondere für Eigenschaften wie Zähigkeit und Festigkeit. Hierbei sind Eigenschaften wie die Zähigkeit und die Festigkeit, aber auch die Wärmeleitfähigkeit und weitere wichtige Eigenschaften nicht jeweils für sich steigerbar ohne gegebenenfalls andere Eigenschaften, die gewünscht sind, negativ zu beeinflussen. Insofern müssen bei Warmarbeitsstählen bezüglich der chemischen Analyse einerseits, aber auch der Gefügeausbildung andererseits, häufig Kompromisse gefunden werden.

Warmarbeitsstähle sind beispielsweise aus der CH 165893 bekannt, wobei hier eine chemische Analyse offenbart wird, andererseits auch eine entsprechende Wärmebehandlung, um gewisse Eigenschaften einzustellen.

Aus der AT 144892 ist ebenfalls eine Stahllegierung insbesondere für Warmarbeitswerkzeuge und Werkzeuge oder Gegenstände, welche in hohem Maße Unempfindlichkeit gegen Temperaturschwankung, Maßhaltigkeit, Warmzerreißfestigkeit und Zähigkeit aufweisen, bekannt. In dieser Schrift werden Chrom-Wolfram-Nickel-Stähle thematisiert, bei welchen der Nickelgehalt teilweise oder ganz durch Kobalt ersetzt sein kann und bei denen Wolfram, Kobalt, Nickel und Chrom enthalten sein können, die bevorzugt aber chromfrei sind.

Aus der WO 2008/017341 A1 ist ein Verfahren zur Einstellung der Wärmeleitfähigkeit eines Stahls, Werkzeugstahls, insbesondere Warmarbeitsstahls und ein Stahlgegenstand hieraus bekannt. Das Stahlmaterial gemäß dieser Schrift soll gegenüber bekannten Werkzeugstählen eine wesentlich höhere Wärmeleitfähigkeit aufweisen, gibt bei einer an sich bekannten Stahlanalyse jedoch keinen Anhalt, wie diese höhere Wärmeleitfähigkeit in praktischer Weise erzielt werden kann.

Aus der DE 1090245 ist die Verwendung eines Stahles für Warmarbeitswerkzeuge bekannt, welche einerseits eine chemische Analyse für einen Warmarbeitsstahl betrifft und andererseits eine Wärmebehandlung, wobei von einer Temperatur im Bereich von 900°C bis 1200°C zweckmäßigerweise 1000°C bis 1100°C abgekühlt werden und eine Anlassbehandlung bei einer Temperatur im Bereich von 500°C bis 750°C erfolgt, so dass eine Härte von 30 bis 60 H_{RC} erreicht wird. Hierdurch soll ein im Wesentlichen martensitisches Gefüge eingestellt werden.

Aus Maschinenmarkt 24/2010, Seiten 58 bis 61 ist es bekannt, dass es vorteilhaft sein kann, in Stahlgefügen eine Bainitisierung herbeizuführen, da die Phase Bainit konträr erscheinende Eigenschaften wie hohe Härte und Zähigkeit miteinander vereint. In vielen Anwendungen scheitert das Bainitisieren jedoch an der Wirtschaftlichkeit aufgrund der langen Behandlungsdauern. Durch ein kontinuierliches Verfahren zum Messen des Bainitisierungsgrades sollen diese Behandlungsdauern optimierbar sein, wobei durch das Bainitisieren insbesondere Restaustenit aus den weicheren Gefügebestandteilen vermieden werden soll. Es wird ausgeführt, dass im Vergleich zu martensitischen Härten das Bainitisieren als herausragender Vorteil die Erreichbarkeit gleichzeitig sehr hoher Härte und hoher Zähigkeit ermöglicht. Zwar wird durch das Bainitisieren im Gegensatz zu martensitischen Gefügen eine geringfügig niedrigere Härte erreicht, jedoch wird die Zähigkeit, die beispielsweise im Kerbschlagversuch als Schlagarbeit erfasst werden kann, deutlich gesteigert. Weitere Vorteile des bainitischen Härtens sollen ein niedriger Verzug, eine hohe Maßstabilität, ein erhöhter Widerstand gegen Risswachstum und die Möglichkeit der Erzeugung von Druckeigenspannung in der Schicht sein. Es wird jedoch herausgestellt, dass der entscheidende Nachteil des bainitischen Härtens die vergleichbar lange Haltezeit im Bainitbad sei. Die Bainitumwandlung sei ein zeitintensiver Prozess, wobei die Prozessdauer vom Werkstoffgefüge, von der Zusammensetzung der Legierung, von den Temperaturen der Austenitisierung sowie von der Bainitumwandlung selbst abhängt. Grundsätzlich erfolgt das Bainitisieren dabei in einem dreistufigen Prozess, wobei zunächst austenitisiert wird und dabei möglichst vollständig der Ferrit in Austenit umgewandelt wird. Anschließend wird das Bauteil so schnell auf die Bainitisierungstemperatur gekühlt, dass kein Ferrit oder Perlit entsteht. Schließlich wird die Bainitisierungstemperatur konstant gehalten. Dabei erfolgt nach und nach die Umwandlung vom Austenit zum Bainit.

Aus design of advanced bainitic steels by optimisation of TTT diagrams and T₀ curves, ISIJ International, Volume 46 (2006), No. 10, pp. 1479 bis 1488 ist es bekannt, dass herkömmliche bainitische Stähle eine nachvollziehbar gute Kombination von Zähigkeit und Härte aufweisen, gegenüber abschreckgehärteten und angelassenen martensitischen Stählen jedoch zurückbleiben. Dies wird darauf zurückgeführt, dass Zementitpartikel einen verschlechternden Effekt in der Mikrostruktur des Stahles besitzen, da Zementit als Schaden- bzw. Rissinitiator in bruchfesten Stählen agieren kann. Das Auftreten von Zementit während der Bainitumwandlung kann jedoch durch eine Stahlzusammensetzung unterdrückt werden, die etwa zwei Gew.% Silizium besitzt. Es werden thermodynamische und kinetische Modelle vorgestellt, um Stähle mit einer optimalen bainitischen Mikrostruktur entwickeln zu können, welche aus einer Mischung aus bainitischen Ferrit, Kunststoff angereichertem Restaustenit und etwas Martensit bestehen. Unter Verwendung dieser Modelle wird ein Satz von sieben karbidfreien bainitischen Stählen mit 0,3 Gewichtsprozent Kohlenstoff vorgeschlagen für die Herstellung.

Aus der DE 600 300 867 T2 ist ein Blockstahl zur Herstellung von Spritzgussformen für Kunststoffmaterial oder zur Herstellung von Werkstücken für die Metallbearbeitung bekannt, welcher bei einem relativ hohen Chromgehalt ein martensitisch oder martensitisch-bainitisches Gefüge besitzen soll.

Aus der EP 2 662 460 A1 ist ein Verfahren zum Herstellen von Stahl, insbesondere als Gießform oder Werkzeug bekannt, mit sowohl einer bainitischen als auch einer martensitischen Phase, wobei der Stahl einer Wärmebehandlung unterzogen werden soll, umfassend einer Austenitisierung, welche von einer schnellen Abkühlung gefolgt wird, um der Bildung von stabilen Phasen mit einer Transformationstemperatur über der des Bainit zu verhindern und die Temperatur hoch und lang genug zu halten, um die Umwandlung von Austenit in Martensit zu verhindern, so dass zumindest 60 Prozent der Umwandlung unterhalb der Martensit-Starttemperatur plus 200°C aber oberhalb der Martensit-Starttemperatur minus 50°C stattfindet, so dass zumindestens 70 Prozent bainitische Mikrostruktur mit feinen karbidähnlichen Bestandteilen erzielt wird und eine Schlagzähigkeit größer als 8 Joule erreicht wird, innerhalb zumindest 20 Millimetern von Oberfläche des thermisch behandelten Stahles. Hierbei soll die Martensit-Starttemperatur ≤ 480°C sein. Insbesondere der Siliziumgehalt soll, wie bei vielen Stählen, die bainitisiert werden sollen, relativ hoch sein, mit 1,3 Prozent.

Aus der EP 1 956 100 A1 ist ein Warmarbeitsstahl und ein Verfahren zu seiner Bearbeitung bekannt, bei dem ein Warmarbeitsstahl einer gegebenen Analyse nach einem Lösungsglühen auf Raumtemperatur abgekühlt wird und anschließend wiedererwärmt wird auf eine Temperatur oberhalb Ac1 und anschließend erneut auf Raumtemperatur abgekühlt wird, anschließend einer Warmbearbeitung unterzogen wird, wobei bei der ersten Wärmebehandlung eine Austenitisierung durchgeführt wird.

Aus der EP 2 006 398 A1 ist ein Verfahren zum Herstellen eines Stahlmaterials bekannt, bei dem ein Stahlmaterial vollständig austenitisiert und anschließend bis zur Temperatur der Perlitnase der entsprechenden Stahllegierung abgekühlt und dort bis zur vollständigen Perlitumwandlung gehalten wird.

Aus der EP 1 887 096 A1 ist ein Warmarbeitsstahl bekannt, der eine erheblich höhere Wärmeleitfähigkeit als bekannte Warmarbeitsstähle besitzen soll und hierzu eine spezielle Analyse besitzt, die jedoch praktisch für jeden Warmarbeitsstahl gilt.

Aus der EP 1 956 100 A1 ist ein Warmarbeitsstahl für Warmarbeitsanwendungen bei 350 °C oder höher bekannt, der eine Härte von 370 HV und eine Festigkeit von 1,2 GPa besitzt. Der Warmarbeitsstahl weist ein bainitisches oder martensitisches Gefüge mit mindestens 80 % Bainit oder Martensit auf. Zudem sind Ferritkristalle in der Größe von 1 µm oder kleiner in der Matrix enthalten.

Aufgabe der Erfindung ist es, ein Verfahren zum Erzeugen eines Warmarbeitsstahles zu schaffen, bei dem in wirtschaftlich vertretbarer kurzer Zeit eine Bainitumwandlung sichergestellt wird.

Die Aufgabe wird mit einem Verfahren mit den Merkmalen des Anspruchs 1 gelöst.

Die erfindungsgemäße Bainitisierung des Stahlmaterials wird dadurch herbeigeführt, dass nach einer Austenitisierungsbehandlung der Stahl abgekühlt wird bis zu einer Haltetemperatur und auf dieser Haltetemperatur solange gehalten wird bis die Bainitisierung abgeschlossen ist.

Hierbei ermöglicht das erfindungsgemäße Verfahren, dass die Bainitisierungshaltezeit in etwa im zeitlichen Bereich der Austenitisierungshaltezeit liegt, was bedeutet, dass die Bainitisierung in einer absolut wirtschaftlichen Zeit ermöglicht wird. Hierbei hängt die Haltezeit insbesondere von der Materialstärke bzw. Materialmenge ab, d. h. insbesondere der Zeit, innerhalb der sich die erforderlichen Haltetemperaturen einstellen.

Erfindungsgemäß kann diese Bainitisierung in Dilatometer gemessen werden und für das jeweilige Stahlmaterial die entsprechende Zeitdauer abhängig von der Materialstärke ermittelt werden. Mit der Absenkung der Temperatur nach der Austenitisierung geht auch eine Schrumpfung aufgrund verringerter Wärmedehnung einher, wobei unmittelbar nach Erreichen der Haltetemperatur durch die Entstehung des Bainits eine relative Längenänderung eintritt. Ist die relative Längenänderung abgeschlossen, ist die mögliche Bainitumwandlung abgeschlossen, wobei, wie bereits ausgeführt, bei dem erfindungsgemäßen Verfahren im Gegensatz zum herkömmlichen Verfahren eine vollständige Bainitumwandlung erzielbar ist. Anschließend wird auf Raumtemperatur abgekühlt, wodurch auch eine erneute Schrumpfung eintritt, wobei jedoch gegenüber dem Material vor der Bainitumwandlung das Material nach der Bainitumwandlung nicht mehr auf den Wert vor der Umwandlung bezüglich der Längenänderung zurückgeht, sondern etwas darüber verbleibt.

Als vorteilhaft hat sich ein Stahl der nach folgender Zusammensetzung ergeben:
C: 0,25 - 0,6 Gew.%
Si: max 0,15 Gew.%
Mn: max. 0,3 Gew.%
Mo: 2 - 5 Gew.%
Cr: 0 - 2 Gew.%
W: 1 - 3 Gew.%:
V: 0 - 2 Gew.%
Ni: 0 - 3 Gew.%

Rest Eisen und erschmelzungsbedingte Verunreinigungen.

Innerhalb dieser Analyse ist es mit einer isothermen Haltestufe zwischen 330°C und 360°C möglich, eine entsprechende vollständige Bainitumwandlung herbeizuführen.

Temperaturen unterhalb dieses Temperaturfensters bewirken bereits eine Martensitbildung, höhere Temperaturen führen zu einer Bildung der oberen Zwischenstufe, die schlechtere mechanische Eigenschaften besitzt.

Die Erfindung wird anhand einer Zeichnung beispielhaft erläutert. Es zeigen dabei:
- Figur 1: Die Messung der Längenänderung über das Temperaturprogramm bei einer Dilatometerprobe eines Stahles;
- Figur 2: Eine Darstellung der relativen Längenänderung über die Temperatur beim Aufheizen und Abkühlen inklusive des isothermen Haltens;
- Figur 3: Den Verlauf der relativen Längenänderung in Abhängigkeit von der Temperatur beim Aufheizen und beim Abkühlen nach der isothermen Umwandlung;
- Figur 4: Das Schliffbild des vollständig bainitisierten nicht angelassenen Stahlmaterials bei einer isothermen Haltetemperatur von 330°C;
- Figur 5: Das Schliffbild eines Stahlmaterials, welches bei 360°C bainitisiert und nicht angelassen wurde zeigt die vollständige Umwandlung;
- Figur 6: Der Verlauf der relativen Längenänderung und der Temperatur während eines Dilatometerversuchs mit einem herkömmlichen Warmarbeitsstahles;
- Figur 7: Der Verlauf der relativen Längenänderung in Abhängigkeit von der Temperatur beim Aufheizen und Abkühlen inklusive einer isothermen Haltestufe bei einem herkömmlichen Warmarbeitsstahl;
- Figur 8: Der Verlauf der relativen Längenänderung und Temperatur während des Dilatometerversuchs bei einer Haltetemperatur von 340°C bei einem herkömmlichen Warmarbeitsstahles;
- Figur 9: Der Verlauf der relativen Längenänderung in Abhängigkeit von der Temperatur beim Aufheizen und Abkühlen inklusive eines isothermen Haltens bei 340°C bei einem herkömmlichen Warmarbeitsstahl;
- Figur 10: Der Bainitanteil in Abhängigkeit von der Haltetemperatur und der Haltezeit bei einem herkömmlichen Warmarbeitsstahl zeigend dass eine vollständige Bainitumwandlung nicht möglich ist;
- Figur 11: Härte und Kerbschlagbiegearbeit bei einem Stahl der erfindungsgemäß bainitisch umgewandelt ist, abhängig von der Anlasstemperatur;

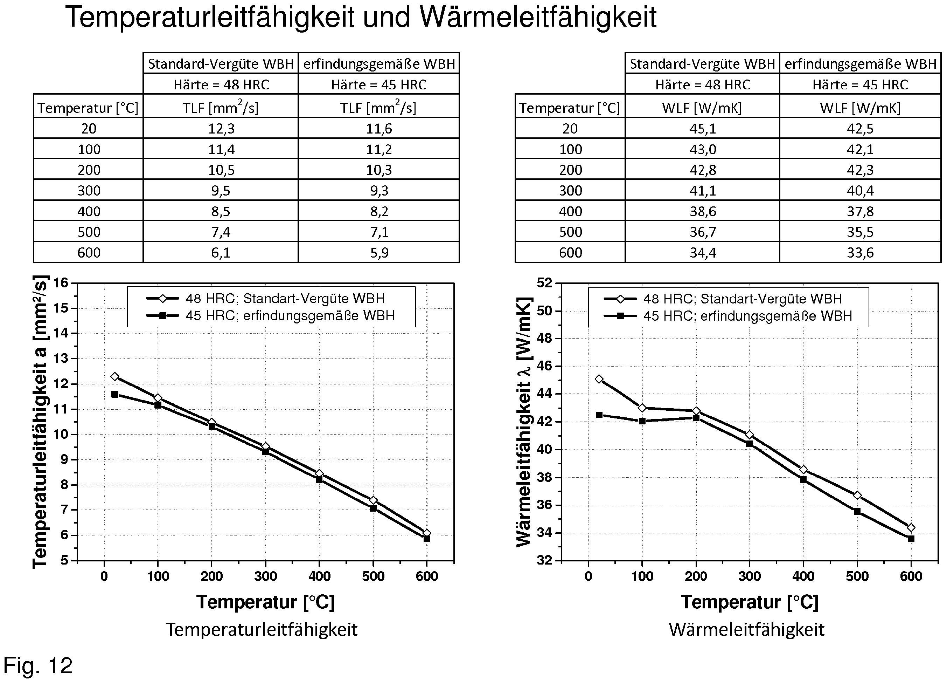

- Figur 12: Temperaturleitfähigkeit und Wärmeleitfähigkeit eines wärmebehandelten Stahles und eines nicht bainitisierten Stahles;
- Figur 13: Der Rest-Austenitgehalt abhängig von der Abkühlgeschwindigkeit bei einem Stahl der nicht erfindungsgemäß wärmebehandelt ist;
- Figur 14: Das Schliffbild, die relative Längenänderung und die Härte eines mit λ = 0,08 abgeschreckten Stahles ohne bainitische vollständige Umwandlung;

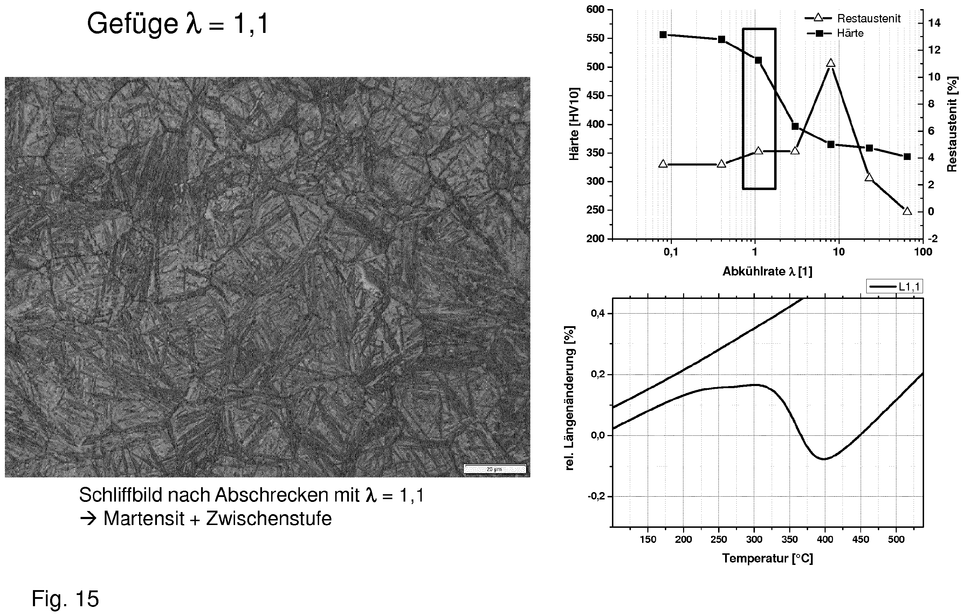

- Figur 15: Gefüge, relative Längenänderung und Härte bei einer Abschreckung mit λ = 1,1;
- Figur 16: Gefüge, relative Längenänderung und Härte bei einer Abschreckung mit λ = 3;
- Figur 17: Zeit und Temperaturverlauf bei der Abkühlung mit λ = 1,1 und λ = 3;
- Figur 18: Beispielhaft eine Wärmebehandlungskurve.

Der Stahl zur Durchführung des erfindungsgemäßen Verfahrens mit dem Erfolg einer vollständig bainitischen Struktur (wenn nicht anders angegeben sind alle Prozentangaben in Gew.%) hat die nachfolgende Zusammensetzung:
C: 0,25 - 0,6 Gew.%
Si: max 0,15 Gew.%
Mn: max. 0,3 Gew.%
Mo: 2 - 5 Gew.%
Cr: 0 - 2 Gew.%
W: 1 - 3 Gew.%:
V: 0 - 2 Gew.%
Ni: 0 - 3 Gew.%

Rest Eisen und erschmelzungsbedingte Verunreinigungen.

Ein solcher Stahl wird in der für Warmarbeitswerkzeugstähle üblichen Weise erschmolzen und legiert.

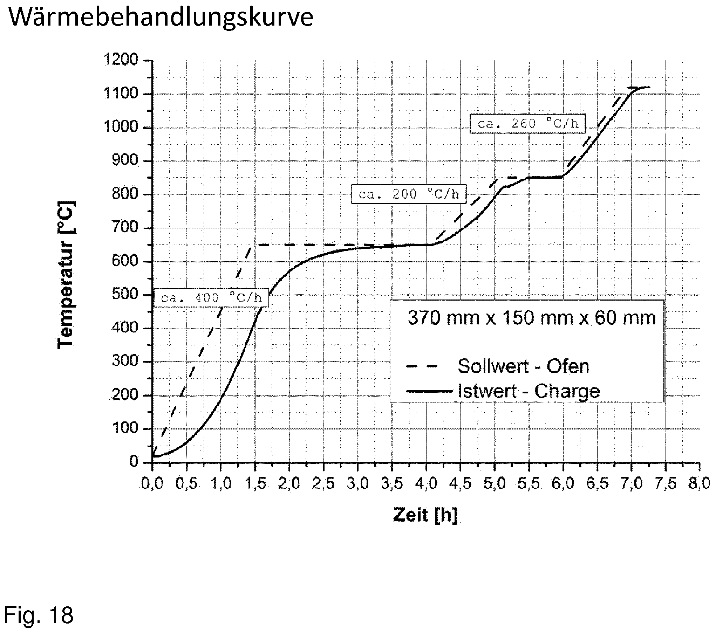

Ein solcher Stahl wird bei der erfindungsgemäßen Wärmebehandlung (Fig. 18) zunächst austenitisiert bei einer Temperatur, die zumindest über der Austenitisierungstemperatur (Ac₃) liegt und eine vollständige Durchaustenitisierung des Werkstoffes bzw. Werkstücks gewährleistet. Hierfür ist gegebenenfalls eine gewisse Haltezeit notwendig, die von dem Werkstück bzw. seinen Dimensionen abhängt. Nach der Austenitisierung, die mit Aufheizraten von 300°C/h bis 400°C/h durchgeführt wird, erfolgt eine rasche Abkühlung mit Abkühlraten von λ=0,4bis λ=2 insbesondere auf Temperaturen zwischen 330°C und 360°C. Diese Temperatur wird gehalten, wobei die Haltezeit ebenfalls auch von der Werkstückgeometrie abhängt.

Insbesondere bestimmt die Legierungslage auch die Abkühlrate. Unabhängig von der Abkühlrate muss die Abkühlung so rasch durchgeführt werden, dass während der Abkühlung keine bainitische Umwandlung stattfindet.

Nachdem die bainitische Umwandlung in der Haltephase abgeschlossen ist, kann das Werkstück auf Raumtemperatur abgekühlt werden, wobei die Abkühlrate hierbei zwischen λ=0,3und λ=1 liegen. Im Ergebnis liegt dann ein vollständig bainitisches Gefüge mit weniger als 1 Gew.% Restaustenit vor.

Aus Figur 18 ergibt sich beispielhaft eine Wärmebehandlung, wobei die Probeabmessungen von 370mm x 150mm x 60mm hat.

Die gestrichelte Linie zeigt hierbei den Ofen-Sollwert bzw. die Ofentemperatur und die durchgezogene Linie zeigt die Temperaturentwicklung des Probenmaterials. Man erkennt, dass bei einer ersten Aufwärmung bis 650°C das Material folgt und einer Haltezeit von vier Stunden die Ofen-Sollwerttemperatur auch vom Chargen-Istwert erreicht wird. Anschließend erfolgt eine weitere Wärmestufe, die ca. 200°C/h als Anstieg beinhaltet und etwa zwei Stunden andauert. Das Material erreicht hierbei etwa nach eineinhalb Stunden auch die Sollwerttemperatur um danach anschließend mit einer Aufheizrate von ca. 260°C/h auf die Austenitisierungstemperatur von über 1100°C aufgeheizt zu werden. Diese Temperatur wird vom Material relativ schnell erreicht.

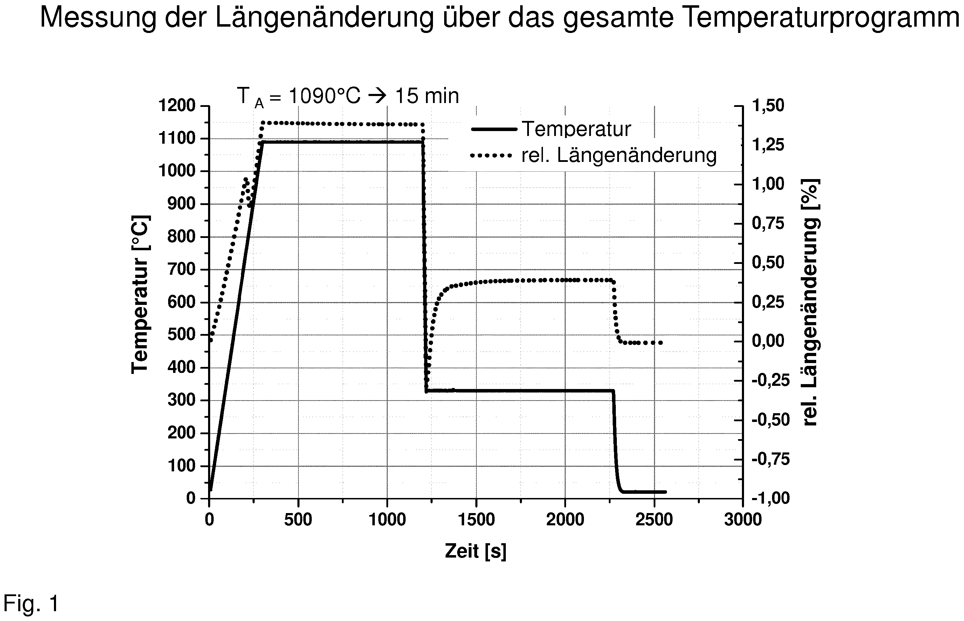

Aus dieser Wärmebehandlung erfolgt dann die Abkühlung und Haltung bei einer vorbestimmten Temperatur wie sie zum Beispiel aus Figur 1 ersichtlich ist.

Innerhalb der angegebenen Stahlanalyse gelingt es mit dem erfindungsgemäßen Wärmebehandlungsverfahren eine vollständig bainitische Struktur innerhalb vertretbarer Wärmebehandlungszeiten inklusive Aufheizen, Abschrecken und Haltephase zu liefern.

Hierbei ist bemerkenswert, dass die Haltezeiten für die Bainitisierung im Wesentlichen im Bereich der Haltezeiten für die Austenitisierung liegen, was bislang unter keinen Umständen erreichbar war.

Es wurde überraschenderweise ein Temperaturbereich gefunden, in welchem der spezielle Werkstoff in einer technisch vernünftigen Zeit vollständig zu Bainit umwandelt und durch einen Anlassprozess gegebenenfalls bezüglich der Festigkeit eingestellt werden kann.

Im Gegensatz zu herkömmlichen Werkstoffen verbleibt bei dem Werkstoff bei der erfindungsgemäßen Wärmebehandlung kein Restaustenit, der in Martensit umwandelt.

Die Erfindung wird anhand von Beispielen weiter erläutert.

### Beispiel 1 (erfindungsgemäß)

Ein Werkstoff mit der folgenden Analyse:

| | |
|---|---|
| C | 0,31 Gew.% |
| Si | 0,10 Gew.% |
| Mn | 0,24 Gew.% |
| P | <0,005 Gew.% |
| S | 0,0004 Gew.% |
| Cr | 0,05 Gew.% |
| Mo | 3,22 Gew.% |
| Ni | 1,95 Gew.% |
| V | <0,005 Gew.% |
| W | 1,74 Gew.% |
| Ti | <0,005 Gew.% |
| Al | 0,01 Gew.% |

wird in herkömmlicher Weise erschmolzen und legiert. Das Material wird in Form einer Dilatometerprobe als Zylinder mit einem Durchmesser von 5mm und einer Länge von 10mm gebracht.Hiermit werden die Dilatometerversuche durchgeführt.

Ein weiterer Probenkörper wird als Kerbschlagrohling mit Abmessungen 55mm x 10mm x 10mm auf Austenitisierungstemperatur erhitzt, wobei die Autenitsierungstemperatur auf 1090°C festgelegt wird. Bei dieser Temperatur wird der Probenkörper 15 Min. gehalten und anschließend auf 330°C abgekühlt. Die Abkühlgeschwindigkeit beträgt hierbei etwa 40°C pro Sekunde.

Die Prüfkörper werden 17 Min. isotherm gehalten und anschließend auf Raumtemperatur abgekühlt.

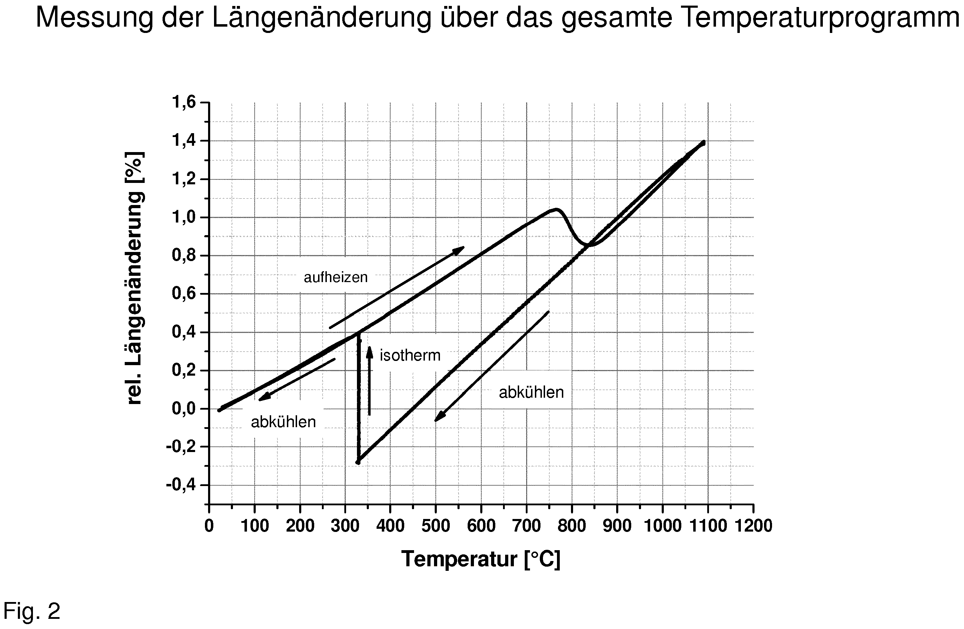

Die sich ergebende Längenänderung des Dilatometerprüfkörperts über das Temperaturprogramm ergibt sich aus Figur 1. Dort ist einerseits die Temperaturerhöhung und andererseits die relative Längenänderung in Prozent angegeben, wobei ersichtlich ist, dass nach dem raschen Abkühlen von der Austenitisierungtemperatur auf 330°C eine relative Ausdehnung stattfindet, die sich einem Maximum annähert, welches gehalten wird. Mit der darauffolgenden Abkühlung wird eine irreversible Längung auch bei Raumtemperatur gegenüber der kleinsten Ausdehnung nach Erreichen der Bainitisierungtemperatur erzielt. In Figur 2 ist die relative Längenänderung in Prozent gegenüber der Temperatur aufgetragen, wobei erkennbar ist, dass sich nach Beendingung des Abkühlens von Austenitisierungstemperatur auf die Bainitisierungshaltetemperatur beim isothermen Halten eine Längenänderung ergibt, so dass sich insbesondere zwischen Aufheizen und Abkühlen eine Hysterese-Schleife ergibt.

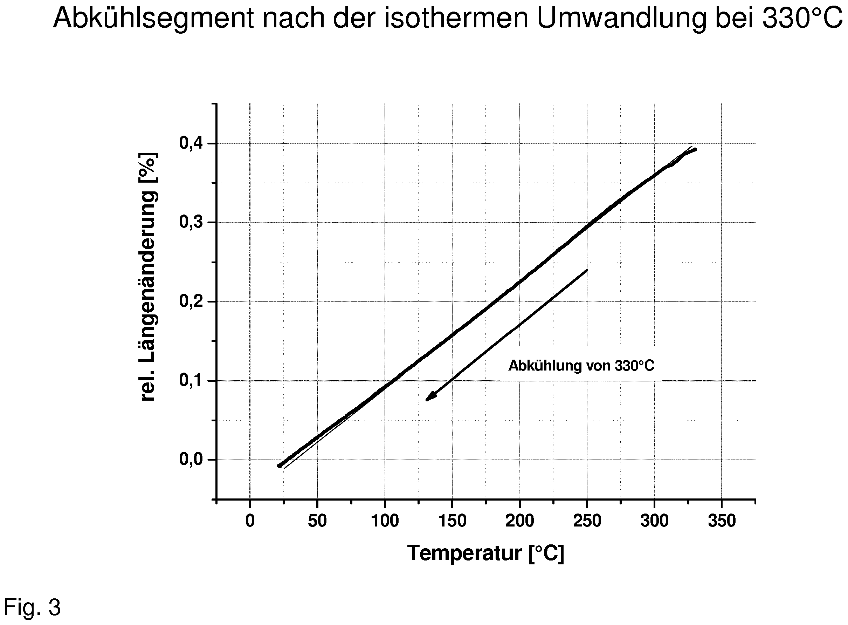

Nach der isothermen Haltezeit verläuft die relative Längenänderung in Prozent proportional zur Abkühlung (Fig. 3).

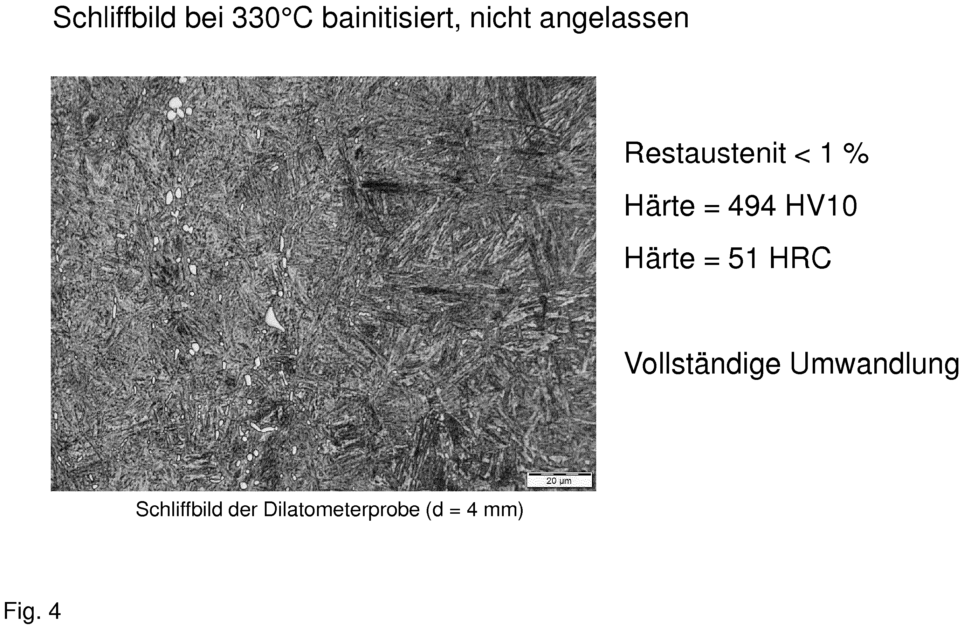

Aus Figur 4 ist das Schliffbild der Dilatometerprobe ersichtlich, wobei die Vickers-Härte 494 beträgt, während die Rockwell-Härte (HRC) 50,5 beträgt. Aus dem Schliffbild ist eine vollständige Umwandlung des Werkstoffs in Bainit erkennbar. Der Rest-Austenitgehalt beträgt < 1 % und ist damit für die Werkstoffeigenschaften unerheblich.

### Beispiel 2 (erfindungsgemäß)

Der Werkstoff aus Beispiel 1 wird in vergleichbarer Weise erschmolzen und legiert und anschließend einer vergleichbaren Wärmebehandlung unterzogen, wobei jedoch die Abkühlung von der Austenitisierungstemperatur 1090°C auf 360°C erfolgt, wobei die Abkühlgeschwindigkeit mit der in Beispiel 1 übereinstimmt.

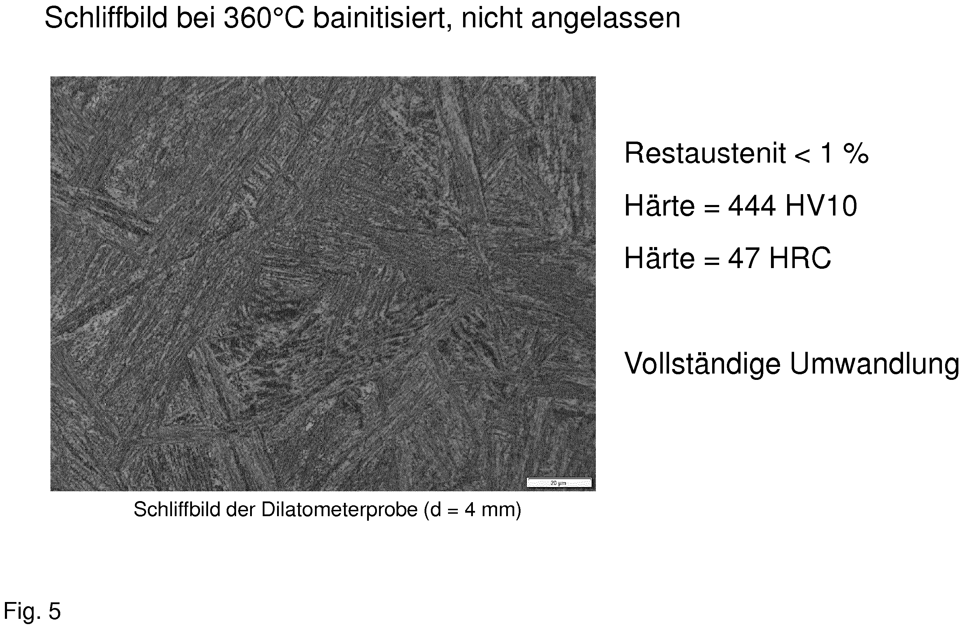

Das Schliffbild, was sich nach dem Abkühlen auf Raumtemperatur ergibt, ist in Figur 5 gezeigt. Auch hier ist der RestAustenitgehalt > 1 %, wobei die Vickers-Härte 494 beträgt und die Rockwell-Härte (HRC) 47 beträgt. Auch hier ist eine vollständige Umwandlung erzielt.

### Beispiel 3 (nicht erfindungsgemäß)

Ein herkömmlicher Warmarbeitsstahl mit einer chemischen Zusammensetzung von
C = 0,38 Gew.%.
Si = 0,10 Gew.%
Mn = 0,40 Gew.%
Cr = 5,00 Gew.%
Mo = 1,30 Gew.%
V = 0,40 Gew.%
entsprechend der DIN EN als Werkstoff 1,2343 bzw. X 38 Cr Mo V5-1 wird nach dem Erschmelzen und Legieren auf einer Austenitisierungstemperatur von 1030°C erhitzt und dort solange gehalten bis die Austenitisierung erfolgt ist. Anschließend wird der Werkstoff auf einer Haltetemperatur von 320°C rasch abgekühlt und dort gehalten bis zur Konstanz der Längenänderung und dann auf Raumtemperatur abgekühlt.

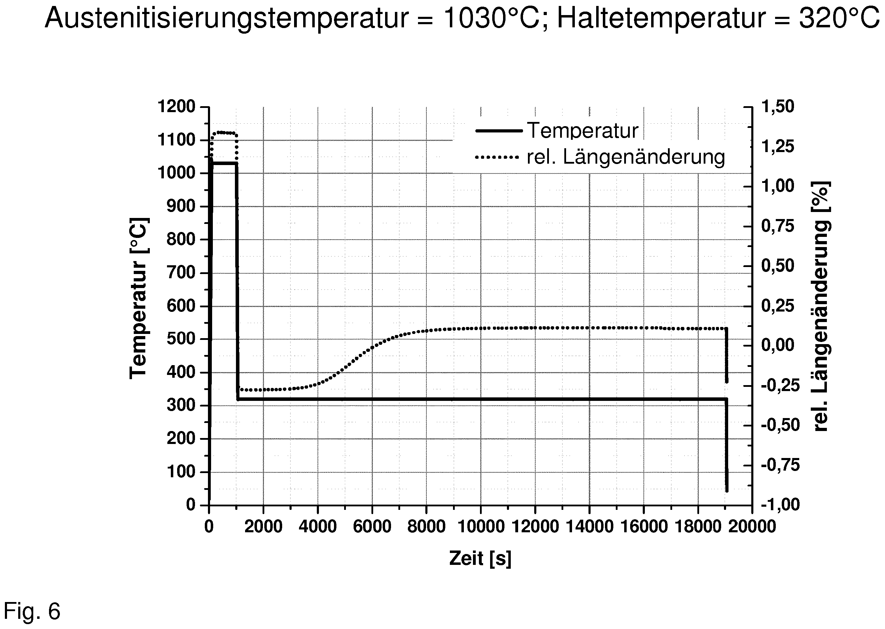

Es gibt sich der Verlauf der relativen Längenänderung und der Temperatur während des Dilatometer-Versuchs aus Figur 6.

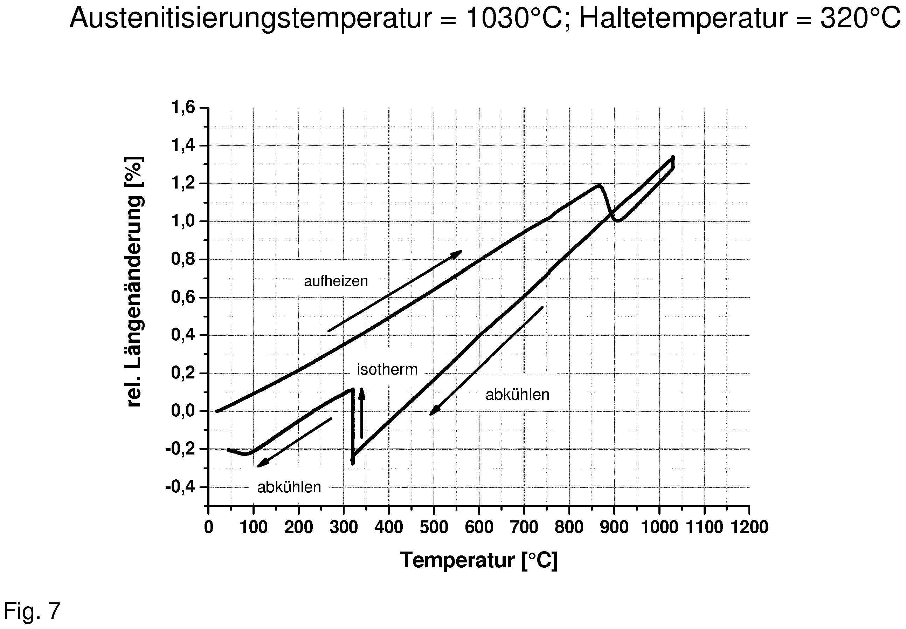

Der Verlauf der relativen Längenänderung in Abhängigkeit der Temperatur beim Aufheizen und inklusive des isothermen Haltens wie beschrieben, ist aus Figur 7 ersichtlich, wobei man erkennt, dass sich keine geschlossene Hysterese ergibt.

### Beispiel 4 (nicht erfindungsgemäß)

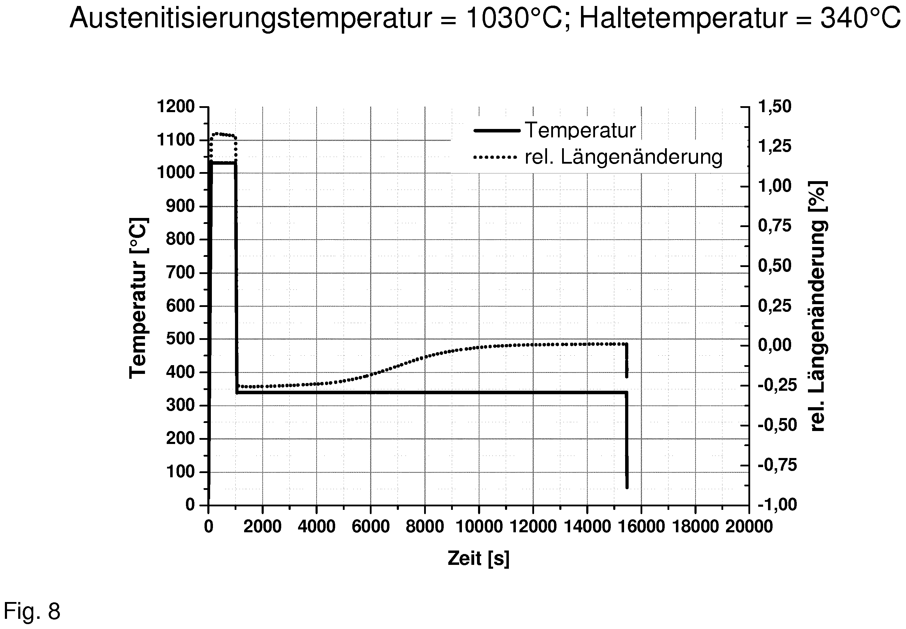

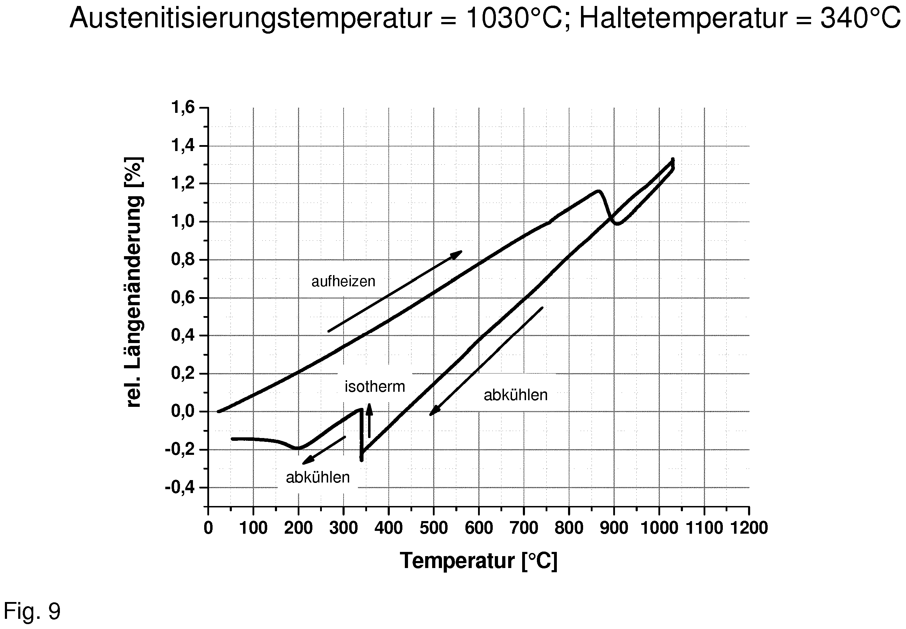

Der Werkstoff gemäß Beispiel 3 wird in gleicher Weise bei 1030°C austenitisiert, jedoch auf eine isotherme Haltetemperatur von 340°C abgekühlt. Der Verlauf der relativen Längenänderung in Abhängigkeit von der Temperatur beim Aufheizen und Abkühlen inklusive des isothermen Haltens ergibt sich hierbei aus den Figuren 8 und 9, wobei auch hier ersichtlich ist, dass zwar eine gewissen Längung aufgrund Bainitbildung stattfindet, jedoch anschließend die Längung wieder abnimmt und insbesondere eine geschlossene Hysterese-Kurve nicht erhalten wird.

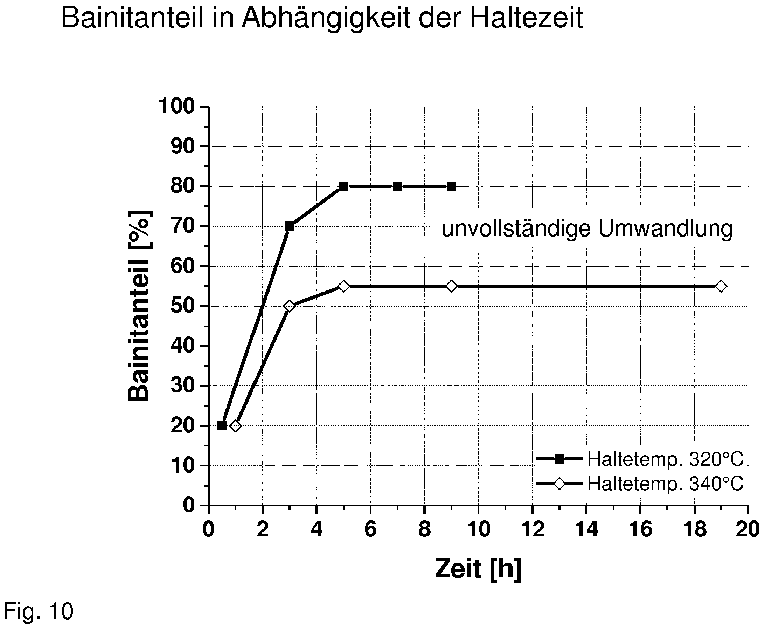

Die Bainitanteile des Beispiels 3 (Haltetemperatur = 320°C) und des Beispiels 4 (Haltetemperatur = 340°C) bei den jeweiligen Haltezeiten in Stunden (!) ergeben sich aus Figur 10.

Hieraus ist ersichtlich, dass bei den Beispielen 3 und 4 die maximale Bainitisierung erst nach 5 Stunden erreicht wird, was ein Vielfaches der innerhalb von maximal 20 Min. maximal erreichbaren Bainitisierung des Werkstoffes ist. Zudem ergibt sich bei einer Haltetemperatur von 340°C eine maximale Bainitisierung von etwa 55 %, während bei einer Haltetemperatur von 320°C eine maximale Bainitisierung von 80 % erzielt wird. Das Übrige Gefüge liegt hierbei ebenfalls als Rest-Austenit bzw. Martensit vor.

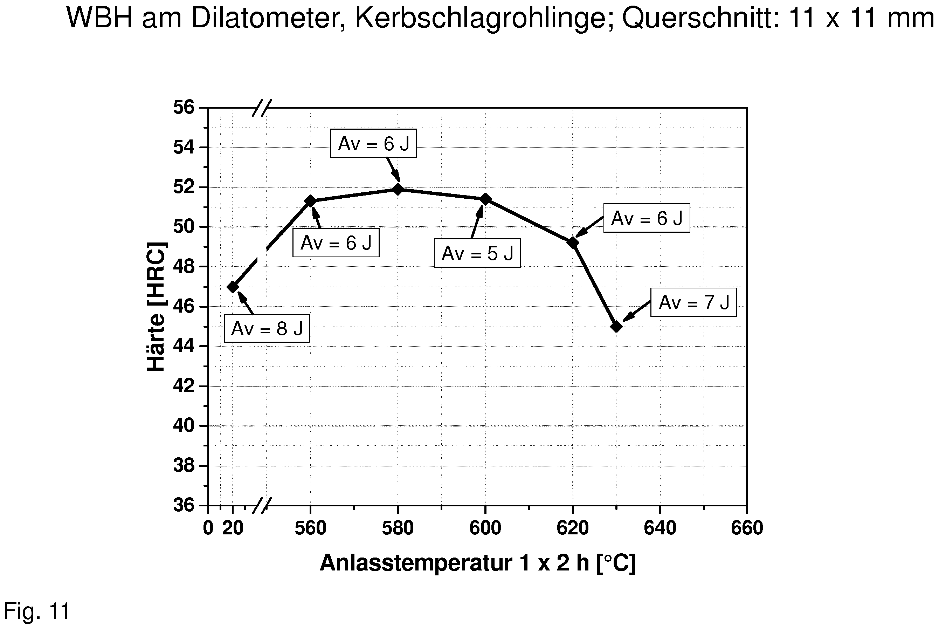

Bei einem Anlassen nach der Wärmebehandlung kann für das Beispiel 1 ein Verlauf der Kerbschlagbiegearbeit bzw. der Härte entsprechend Figur 11 beobachtet werden. Abhängig von der Anlasstemperatur bei jeweils zwei Stunden Anlasszeit kann die Rockwell-Härte zwischen 47 und 52 variiert werden, wobei jeweils die Kerbschlagbiegearbeit zwischen 8 Joule bei Raumtemperatur (d. h. im nicht angelassenen Zustand) und 5 bis 6 Joule liegt, was eine recht gleichmäßige Härtung und Zähigkeit bedeutet.

### Beispiel 5 (nicht erfindungsgemäß)

Der Werkstoff wird einer konventionellen Wärmebehandlung am Dilatometer unterzogen wobei die Probenabmessungen denen der vorherigen Beispiele entsprechen.

Hierbei werden unterschiedliche λ-Werte verwendet, wobei λ in diesem Fall der Abkühlungsparameter ist, der bei der Wärmebehandlung von Werkzeugstählen üblich ist. Er bezeichnet die Zeit, die für die Abkühlung eines Stahls von 800°C auf 500°C nötig ist in Hektosekunden.

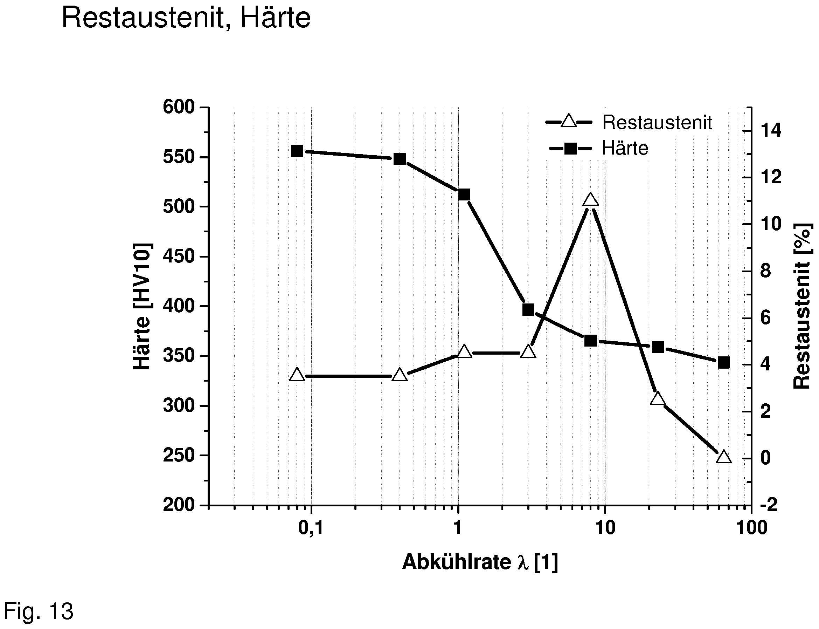

Der Härte und Rest-Austenitverlauf bei unterschiedlichen λ-Werten ist aus Figur 13 ersichtlich, wobei die Härte bei langsamer Abkühlung erwartungsgemäß von etwa 550 Vickers-Härten auf 325 Vickers-Härten abfällt, während der Restaustenitgehalt bei steigenden λ-Werten ansteigt.

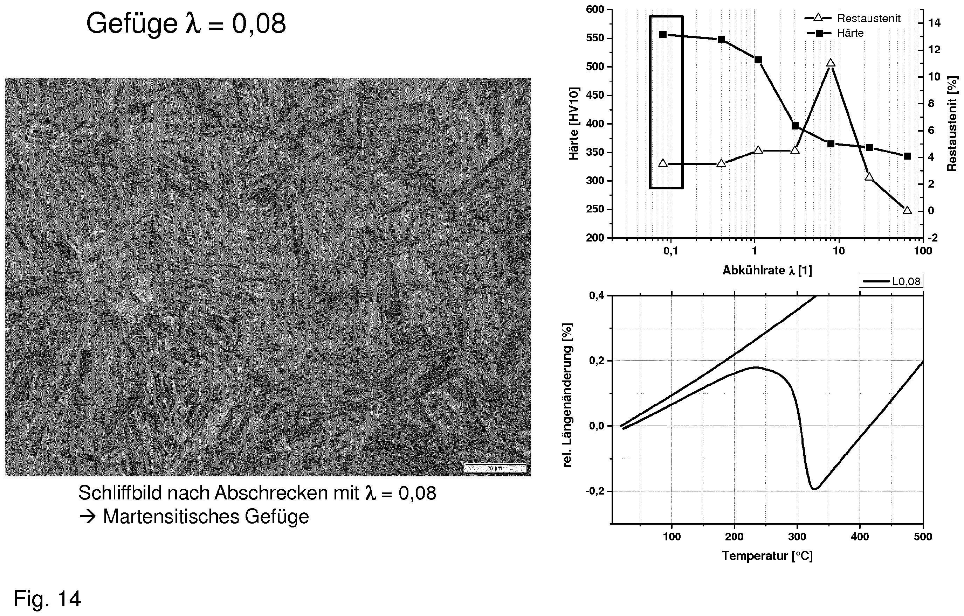

Bei λ=0,08 und einer herkömmlichen Wärmebehandlung ergibt sich bei dem Werkstoff ein martensitisches Gefüge, wobei sich das Gefügebild aus Figur 14 ergibt, ebenso wie die relative Längenänderung und die Temperatur bei der Abkühlung.

Bei λ=1,1 ist das Gefüge durch Marensit und eine Zwischenstufe gekennzeichnet, wobei die Längenänderung hier einen anderen Verlauf nimmt.

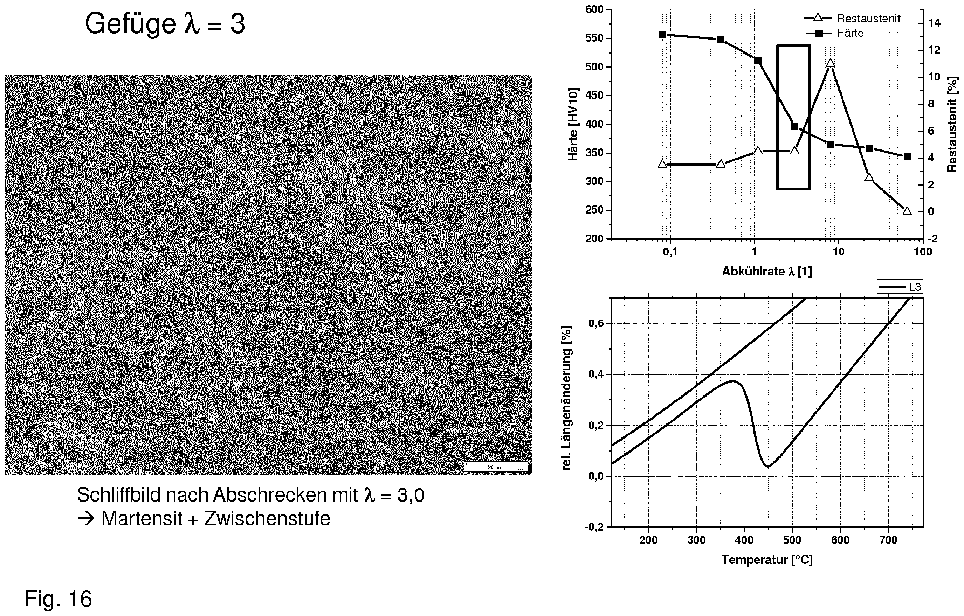

In Figur 16 ist das Gefüge bei λ=3 angegeben, wobei sich Martensit und Zwischenstufe ergibt und ein grundsätzlich unterschiedliches Längenänderungs- zu Temperaturverhältnis.

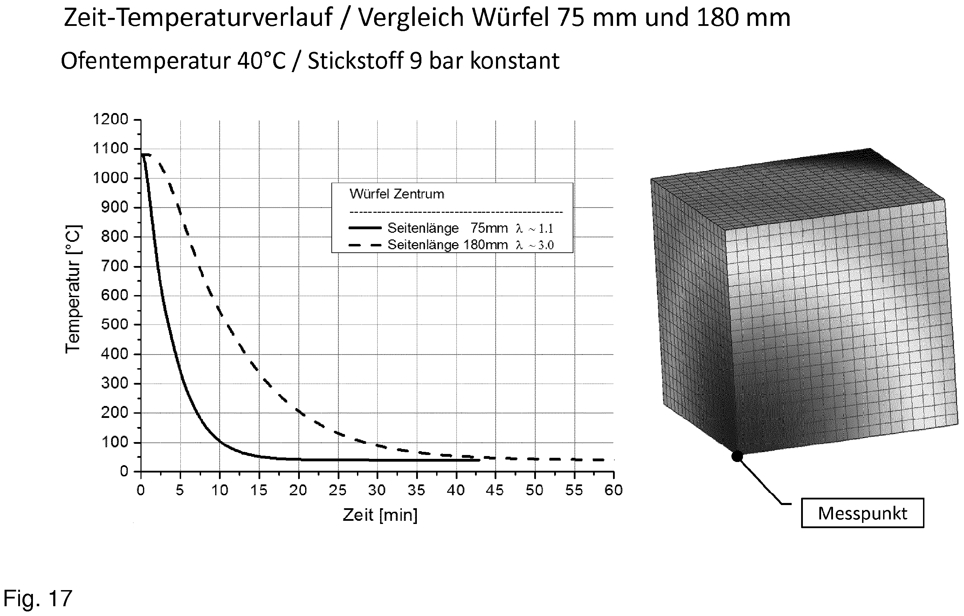

In Figur 17 ist bei einem Würfel mit Kantenlängen 75 mm und 180 mm dargestellt, wie sich die Temperatur und die Zeit verhalten, wobei die Abkühlung des kleineren Würfels mit λ=1,1 erfolgt, während die Abkühlung des größeren Würfels mit λ=3 erfolgt.

Die Versuche zeigen eindrucksvoll, dass es gelungen ist, eine Kombination aus einer chemischen Zusammensetzung des Stahls einerseits und einer Wärmebehandlung andererseits zu finden, die ein vollständig bainitisches Gefüge eines Warmarbeitswerkzeugs ermöglicht.

Der Werkstoff entfaltet dieses Potential nur bei der erfindungsgemäßen Wärmebehandlung, eine konventionelle Wärmebehandlung führt nicht zu dem gewünschten Ergebnis.

Umgekehrt führt die erfindungsgemäße Wärmebehandlung bei anderen Werkstoffen ebenfalls nicht zum Ergebnis. Bei der Erfindung ist von Vorteil, dass in nachvollziehbarer und sicherer Weise ein Werkzeugstahl erzeugt werden kann, der über ein bainitisches Gefüge und damit über herausragende zähharte Eigenschaften verfügt, die durch das entsprechende Anlassen und gemäß auf bestimmte Härteeigenschaften gesteuert werden können, bei insgesamt hohen Kerbschlagbiegearbeiten.

## Patentansprüche

1. Verfahren zum Herstellen eines Werkzeugstahles, insbesondere eines Warmarbeitsstahles,
**dadurch gekennzeichnet,**
**dass** ein Stahl der folgenden Analyse
C: 0,25 - 0,6 Gew.%
Si: max 0,15 Gew.%
Mn: max. 0,3 Gew.%
Mo: 2 - 5 Gew.%
Cr: 0 - 2 Gew.%
W: 1 - 3 Gew.%:
V: 0 - 2 Gew.%
Ni: 0 - 3 Gew.%
Rest Eisen und erschmelzungsbedingte unvermeidliche Verunreinigungen erschmolzen und legiert wird, wobei ein Werkstück aus diesem Stahl aufgeheizt wird und bei Temperaturen > Ac₃ austenitisiert wird und anschließend abgekühlt wird, wobei die Abkühlung auf eine Temperatur von 330°C bis 360°C erfolgt und das Werkstück bei dieser Temperatur isotherm gehalten wird, bis das Werkstück vollständig bainitisch umgewandelt ist und anschließend die Abkühlung auf Raumtemperatur erfolgt, wobei für eine Dauer von 30 bis 90 min. isotherm gehalten wird, und die Abkühlung von der Austenitisierungstemperatur auf die isotherme Haltetemperatur mit Abkühlraten von λ=0,4 bis λ=2 durchgeführt wird.

2. Verfahren nach Anspruch 1,
**dadurch gekennzeichnet,**
**dass** nach vollkommener Durchwärmung für eine Dauer von 20 bis 40 min. austenitisiert wird.

3. Verfahren nach einem der vorhergehenden Ansprüche,
**dadurch gekennzeichnet,**
**dass** nach dem Abkühlen auf Raumtemperatur das Werkstück zur Einstellung der Härte angelassen wird.

4. Verfahren nach einem der vorhergehenden Ansprüche,
**dadurch gekennzeichnet,**
**dass** die Anlasstemperatur zwischen 580°C und 660°C beträgt, wobei die Anlassdauer zwischen 1 Stunden und 2 Stunden beträgt.

## Claims

1. Method for producing a tool steel, in particular a hot-working steel,
**characterised in that**
a steel with the following analysis
C: 0.25 - 0.6 % w/w
Si: max 0.15 % w/w
Mn: max. 0.3 % w/w
Mo: 2 - 5 % w/w
Cr: 0 - 2 % w/w
W: 1 - 3 % w/w:
V: 0 - 2 % w/w
Ni: 0 - 3 % w/w,
the remainder being iron and unavoidable impurities from the melting process is melted and alloyed, wherein a workpiece from this steel is heated up and austenitised at temperatures > Ac₃ and then cooled down, wherein the cooling is carried out to a temperature of 330°C to 360°C and the workpiece is held isothermally at this temperature until the workpiece has changed into a bainitic steel, after which cooling down to room temperature takes place wherein it is held isothermally for a period of 30 to 90 minutes, and the cooling can be carried out from the austenitising temperature to the isothermal temperature with cooling rates from λ=0.4 to λ=2.

2. Method according to claim 1, **characterised in that,**
after thorough heating, austenitising takes place for 20 to 40 minutes.

3. Method according to any one of the preceding claims, **characterised in that,** after cooling to room temperature, the workpiece is tempered to adjust the hardness.

4. Method according to any one of the preceding claims, **characterised in that** the tempering temperature is between 580°C and 660°C wherein the tempering lasts for between 1 and 2 hours.

## Revendications

1. Procédé de fabrication d'un acier à outils, en particulier d'un acier pour travail à chaud,
**caractérisé en ce**
**qu'**un acier de l'analyse suivante
C : 0,25-0,6 % en poids
Si : 0,15 % en poids max.
Mn : 0,3 % en poids max.
Mo : 2-5 % en poids
Cr : 0-2 % en poids
W : 1-3 % en poids
V : 0-2 % en poids
Ni : 0-3 % en poids
le reste étant constitué de fer et d'impuretés inévitables résultant de la fusion, est fondu et allié, une pièce à usiner en cet acier étant chauffée et austénitisé à des températures > Ac₃ et refroidie ensuite, le refroidissement ayant lieu à une température entre 330°C et 360 °C et la pièce à usiner étant maintenue isotherme à cette température jusqu'à ce que la pièce à usiner soit complètement transformée bainitiquement et soit ensuite refroidie à la température ambiante, étant maintenue isotherme pendant une durée entre 30 et 90 min. et le refroidissement de la température d'austénitisation à la température de maintien isotherme à des vitesses de refroidissement de λ=0,4 à λ=2 étant réalisé.

2. Procédé selon la revendication 1,
**caractérisé en ce**
**qu'**il est austénitisé pendant une durée entre 20 et 40 min. après un réchauffement complet.

3. Procédé selon l'une quelconque des revendications précédentes,
**caractérisé en ce**
**qu'**après le refroidissement à la température ambiante, la pièce à usiner est soumise au revenu pour le réglage de la dureté.

4. Procédé selon l'une quelconque des revendications précédentes,
**caractérisé en ce**
**que** la température du revenu est entre 580°C et 660 °C, la durée du revenu étant entre 1 et 2 heures.
